# EUROPÄISCHE PATENTSCHRIFT

(11) **EP 1 153 488 B1**
(45) Veröffentlichungstag und Bekanntmachung des Hinweises auf die Patenterteilung: **13.11.2002**
(21) Anmeldenummer: 00903593.2
(22) Anmeldetag: 20.01.2000
(51) Int. Cl.: H04B 10/08

(54) **VERFAHREN ZUR ÜBERWACHUNG DER ÜBERTRAGUNGSQUALITÄT EINES OPTISCHEN ÜBERTRAGUNGSSYSTEMS, INSBESONDERE EINES OPTISCHEN WELLENLÄNGENMULTIPLEXNETZES**
METHOD FOR MONITORING THE TRANSMISSION QUALITY OF AN OPTICAL TRANSMISSION SYSTEM, NOTABLY AN OPTICAL WAVELENGTH-DIVISION MULTIPLEX NETWORK
PROCEDE DE SURVEILLANCE DE LA QUALITE DE TRANSMISSION D'UN SYSTEME DE TRANSMISSION OPTIQUE, NOTAMMENT D'UN RESEAU OPTIQUE DE MULTIPLEXAGE PAR REPARTITION EN LONGUEUR D'ONDES

(30) Priorität: 12.02.1999 DE 19905814
(43) Veröffentlichungstag der Anmeldung: 14.11.2001
(73) Patentinhaber: Deutsche Telekom AG, 53113 Bonn (DE)
(72) Erfinder: HANIK, Norbert, D-13591 Berlin (DE); SCHMID, Herbert, D-63512 Hainburg (DE)
(86) Internationale Anmeldenummer: EP0000420
(87) Internationale Veröffentlichungsnummer: WO00048337

(56) Entgegenhaltungen:
- MUELLER,HANIK,GLADISCH,FOISEL,CASPAR: "APPLICATION OF AMPLITUDE HISTOGRAMS FOR QUALITY OF SERVICE MEASUREMENTS OF OPTICAL CHANNELS AND FAULT IDENTIFICATION" ECOC98, 20. - 24. September 1998, Seiten 707-708, XP000887223 Madrid, Spanien
- PATENT ABSTRACTS OF JAPAN vol. 1998, no. 14, 31. Dezember 1998 (1998-12-31) & JP 10 239214 A (NIPPON TELEGR &TELEPH CORP <NTT>), 11. September 1998 (1998-09-11)
- SHAKE,TAKARA,KAWANISHI,YAMABAYASHI: "OPTICAL SIGNAL QUALITY MONITORING METHOD BASED ON OPTICAL SAMPLING" ELECTRONICS LETTERS, Bd. 34, Nr. 22, 29. Oktober 1998 (1998-10-29), Seiten 2152-2154, XP000886728
- ATSUSHI HIRAMATSU: "TRAINING TECHNIQUES FOR NEURAL NETWORK APPLICATIONS IN ATM" IEEE COMMUNICATIONS MAGAZINE,US,IEEE SERVICE CENTER. PISCATAWAY, N.J, Bd. 33, Nr. 10, 1. Oktober 1995 (1995-10-01), Seiten 58,63-67, XP000545274 ISSN: 0163-6804 in der Anmeldung erwähnt

## Beschreibung

### Technisches Gebiet:

Die Erfindung betrifft ein Verfahren zur Überwachung der Übertragungsqualität eines optischen Übertragungssystems, insbesondere eines optischen Wellenlängenmultiplexnetzes.

### Stand der Technik:

Bei jedem optischen Übertragungssystem, insbesondere aber bei optischen Wellenlängenmultiplex-Systemen (WDM-Systemen), stellt sich das Problem der Überwachung der Übertragungsqualität, um eine bestimmte Dienstequalität (Quality of Service - QoS) zu garantieren und langsame Systemverschlechterungen (Degradation) aufspüren zu können. Transparente optische Wellenlängenmultiplex-Systeme werden zunehmend eingesetzt, da sie in erheblichem Maße die Kapazität und Flexibilität der heutigen Informations- und Telekommunikationsnetze erhöhen. Über eine optische Lichtleitfaser wird dabei nicht nur ein optisches Signal einer einzigen Wellenlänge übertragen, sondern durch die Verwendung einer Mehrzahl von Wellenlängen werden mehrere optische Kanäle zur Verfügung gestellt, die voneinander unabhängig sind. Bei optischen Wellenlängenmultiplexnetzen handelt es sich um transparente, analoge Übertragungssysteme, die in der Regel digitale Nutzsignale übertragen sollen und damit die Realisierung verschiedenster Telekommunikationsdienste ermöglichen. Eine der wesentliche Vorteile der Transparenz ist es, daß die Datenrate und das Format für jeden optischen Kanal eines Wellenlängenmultiplex-Systems unabhängig voneinander gewählt werden kann. Diese dazugewonne Flexibilität kommt den Anforderungen der Kunden entgegen und ermöglicht es, neue Dienste zu integrieren. Auf der anderen Seite ist das Garantieren einer bestimmten Dienstequalität und das Aufspüren von langsamen Systemverschlechterungen gerade wegen des nicht festgelegten Datenformats ein ernstes Problem in transparenten Netzen.

Ein wesentlicher Parameter für die Beurteilung der Dienstequalität eines digitalen Signals bei der Übertragung über ein optisches Netz ist die Bitfehlerrate (BER). Üblicherweise werden zur Abschätzung der BER des transportierten Nutzsignals bestimmte Overhead-Bytes des gewählten Übertragungsformats (z. B. SDH, ATM, etc.) ausgewertet. Dieses Verfahren kann in transparenten optischen Systemen, bei denen das Datenformat a priori nicht festgelegt ist, jedoch nicht verwendet werden. Darüber hinaus läßt die Auswertung der BER keine Rückschlüsse auf die Ursache einer eventuell auftretenden Signaldegradation zu. Wird zur Beurteilung der Signalgüte dagegen lediglich das Augendiagramm des empfangenen Datensignals ausgewertet, so benötigt auch dieses Verfahren den Bit-Takt des auszuwertenden Signals. Die elektronische Gewinnung des Bit-Taktes ist mit vertretbarem Aufwand nur für feste, dem auswertenden System bekannte Datenraten möglich. Diese Randbedingung schränkt die Transparenz von optischen Transportnetzen (WDM-Netze) in unakzeptabler Weise ein.

Aus der Veröffentlichung "Application of amplitude histograms for quality of service measurememts of optical channels und fault identification" von K. Mueller et al., in ECOC 98, 20.-24. September 1998, Seiten 707-708, Madrid, Spanien, ist ein Verfahren zur Charakterisierung von optischen Übertragungskanälen bekannt geworden, bei welchem Amplitudenhistogramme ausgewertet werden. Diese werden gewonnen, indem das optische Signal durch eine Photodiode erfaßt und das von dieser abgegebene elektrische Signal asynchron abgetastet wird. Mittels der Amplitudenhistogramme sind z.B. Rückschlüsse auf das Ausmaß und die Ursachen langsamer Verschlechterungen der Übertragungsqualität möglich.

Aus den Patents of Japan, Vol. 1998, No. 14, JP 10 23 92 14 A, veröffentlicht am 11. September 1998, ist ein Verfahren bekannt, mit welchem der Verlust im Übergangsbereich zwischen zwei Lichtleitern (connection loss) bei einer Betriebswellenlänge berechnet werden kann. Die Berechnung erfolgt mittels eines neuronalen Netzwerkes, welches so lange eingelernt wird, bis die Differenz zwischen dem Ausgangssignal des neuronalen Netzwerkes und einem Trainingssignal einen bestimmten Wert unterschreitet.

Aus der Veröffentlichung "Optical signal quality monitoring method based on optical sampling" von I. Shake et al., in Electronics Letters, Bd. 34, Nr. 22, 29. Oktober 1998, Seiten 2152-2154, ist ein Verfahren zur Überwachung des mittleren Q-Faktors eines optischen Signals in einem optischen Übertragungssystem bekannt, wobei Amplitudenhistogramme optischer Signale gemessen werden. Hieraus wird eine Aussage über das Signal/Rausch-Verhältnis eines digitalen Signals abgeleitet.

In der Veröffentlichung "Training techniques for neural Network applications in ATM" vonAtsushi Hiratsu, in IEEE Communications Magazine, IEEE Service Center, Piscataway, New York, US, Nr. 10, Band 33, 1. Oktober 1995, Seiten 58, 63-67, ISSN 0163-6804, wird das Training von neuronalen Netzwerken diskutiert.

### Technische Aufgabe:

Der Erfindung liegt daher die Aufgabe zugrunde, ein Verfahren zur Überwachung der Übertragungsqualität eines optischen Übertragungssystems anzugeben, welches insbesondere zur Kontrolle eines transparenten Übertragungssystems, z.B. eines WDM-Netzes, geeignet ist, bei welchem die Datenrate und das Übertragungsformat flexibel und nicht a priori festgelegt ist.

### Offenbarung der Erfindung:

Diese Aufgabe wird gelöst durch ein Verfahren zur Überwachung der Übertragungsqualität eines optischen Übertragungssystems, bei welchem ein Amplitudenhistogramm eines über das Übertragungssystem übertragenen optischen Signals, Übertragungssignal, aufgezeichnet und nach Bitfehlerraten und/oder Störungsursachen klassifiziert wird, dadurch gekennzeichnet, daß
- aus dem Amplitudenhistogramm Eingabedaten gewonnen werden, die einem neuronalen Netz zugeführt werden, welches aus den Eingabedaten Ausgabewerte erzeugt, und die Ausgabewerte Schätzwerten der Bitfehlerrate des Signals zugeordnet werden, und/oder
- die Ausgabewerte Störungsursachen des Signals zugeordnet sind, wie z. B. Rauschen, das im Englischen Cross-talk genannte Nebensprechen, Signalverzerrungen.

Vorteilhafte Weiterbildungen des Verfahrens sind in den Unteransprüchen gekennzeichnet.

Das erfindungsgemäße Verfahren ermöglicht es, die Dienstequalität (charakterisiert durch die Bitfehlerrate BER) eines transparenten digitalen Nutzsignals, durch die Erfassung von analogen Werten unabhängig von der Datenrate zu beurteilen und die Ursache (z. B. Rauschen, Dispersion, Crosstalk...) und Stärke der Systemverschlechterung zu erfassen. Im Gegensatz zu bekannten Verfahren, welche die Bitfehlerrate auf der digitalen Ebene ermitteln und somit ein analoges Übertragungssystem mit digitalen Parametern beurteilen, verwendet das erfindungsgemäße Verfahren ein wesentlich unmittelbareres Beurteilungskriterium, nämlich die Amplitudenverteilung des analogen optischen Übertragungssignals. Aus dieser Amplitudenverteilung wird die Information über den Zustand des Übertragungssystems gewonnen, indem sie mittels eines Neuronalen Netzes bestimmten digitalen Parametern, nämlich bestimmten Werten der BER, zugeordnet wird. Durch Auswertung eines Amplitudenhistogramms kann zudem auch auf die Art der Störung rückgeschlossen werden, die zu einer bestimmten BER führt. Diese Information steckt im wesentlichen in der Amplitudenverteilung und geht bei einer Auswertung auf digitaler Ebene verloren. Das erfindungsgemäße Verfahren ermöglicht daher auch den Rückschluß auf die Ursache der Störung bzw. Degradation und damit ein gezieltes Eingreifen in das Übertragungssystems zur Behebung dieser Einflüsse. Des weiteren kann vorteilhaft auf die Kenntnis der Übertragungsrate bzw. des Übertragungsformates verzichtet werden.

Das wesentliche Prinzip der Erfindung besteht darin, mit Hilfe von lernenden, neuronalen Netzen und analogen Signalwerten in Form von Amplitudenhistogrammen als Eingangs- oder Meßdaten, die EER zu beurteilen und die Ursache einer Signalverschlechterung aufzuzeigen. Dabei arbeitet das Verfahren wie folgt: Das Übertragungssignal wird mit einer optischen Erfassungseinrichtung aufgenommen, vorzugsweise einer Photodiode mit hoher Bandbreite. Das elektrische Ausgangssignal der Erfassungseinrichtung wird asynchron abgetastet. Hierzu ist keine Taktrückgewinnung notwendig. Wichtig für die Abtastung ist ein willkürlich gewählter Zeitschlitz und die Sammlung einer hohen Anzahl von Abtastwerten, die alle relevanten statistischen Eigenschaften des Signals beinhalten. Auch ist es wichtig, daß die Zeitschlitze der Abtasteinheiten kurz genug sind, um auch schnelle, oszillatorische Störungen, die z. B. durch Inband-Nebensprechen (Cross-Talk) verursacht werden, zu erfassen. Das Amplitudenhistogrammen kann beispielsweise mit einem Oszilloskop aufgenommen werden, welches das Ausgangssignal der Erfassungseinrichtung zeitlich gerastert abfragt.

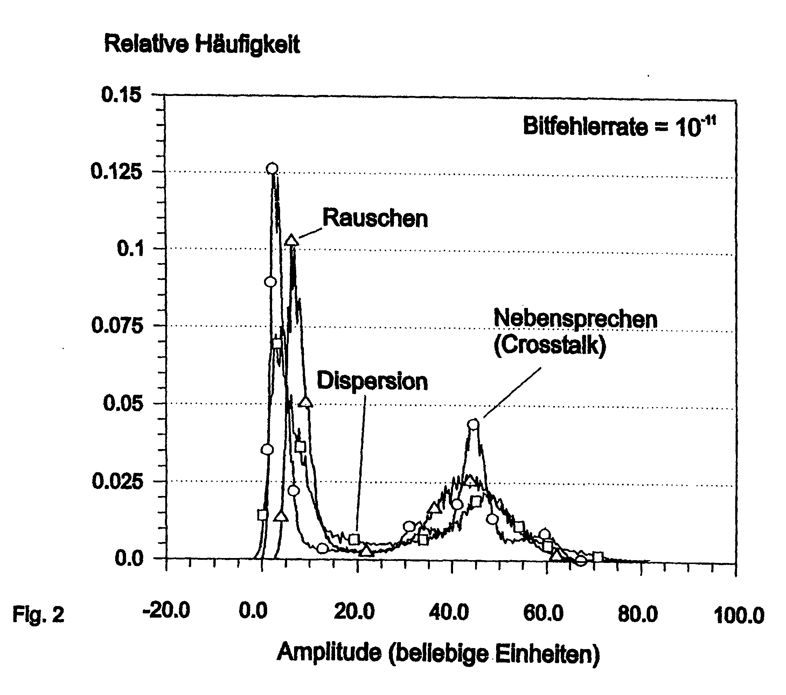

Die Daten des Amplitudenhistogramms werden normiert, um sie von absoluten Amplitudenwerten und der gewählten Skalierung des Histogramms unabhängig zu machen. Anschließend werden die aufgenommenen Amplitudenhistogrammdaten geeignet vorverarbeitet, um sie dem neuronalen Netz präsentieren zu können. Dazu wird dem Amplitudenhistogramm eine bestimmte Anzahl von y-Werten entnommen, die an festgelegten x-Werten des Histogrammdiagramms (vgl. Figur 2) ermittelt werden. Anschließend werden die entnommenen Werte gleichmäßig so angehoben, so dss der höchste Wert < 1 ist. Nun werden die Werte den Neuronen der Eingabeschicht präsentiert.

Die Anzahl der Werte entspricht der Anzahl der Eingangsneuronen des neuronalen Netzes. Das neuronale Netz propagiert die angelegten Werte durch das Netz, ordnet die Eingabedaten einer dazugehörigen Bitfehlerratenklasse zu und zeigt als weiteren Ausgabewert die Art der Störung an. Die Funktion und Arbeitsweise von neuronalen Netzen ist in der Literatur hinlänglich beschrieben. Sie werden in der Praxis auf einer Datenverarbeitungseinrichtung durch ein Computerprogramm realisiert.

Damit die eingesetzten neuronalen Netze die ihnen gestellte Aufgaben lösen können, ist es notwendig sie vorher zu trainieren. Dazu werden verschiedene Trainingsmuster ausgewählt und zu einer Trainingsmusterdatei zusammengefügt. Die Trainingsmuster sind beispielsweise berechnete oder gemessene und vorverarbeitete Amplitudenhistogramme, die verschiedenen bekannten Bitfehlerratenklassen und Störungsarten entsprechen.

Bei neuronalen Netzen handelt es sich um lernende konnektionistische Systeme. Sie bestehen in der Regel aus einer Schicht Neuronen, die die Eingabeschicht bilden (Eingangsneuronen), einer oder mehrerer vesteckter Schichten (Hidden-Neuronen) und einer Schicht Neuronen, die die Ausgabeschicht bilden. Jedes Neuron hat eine bestimmte Übertragungsfunktion. Zwischen den Neuronen der verschiedenen Schichten bestehen Verbindungen mit verschiedenen Gewichtungen (positiv, null oder negativ). Der Eingabewert eines Neurons ergibt sich durch die Gesamtheit der gewichteten Ausgabewerte der Neuronen der vorherigen Schicht.

Bei dem Training werden die einzelnen Gewichte der Verbindungen zwischen den Neuronen so eingestellt, daß zu der Eingabe die richtige Ausgabe erscheint. Die Funktion und Arbeitsweise der verschiedenen Trainingsalgorithmen für neuronale Netze sind prinzipiell bekannt. Vor dem Training und dem Einsatz des neuronalen Netzes wird die neuronale Netztopologie und das zu verwendende Trainingsverfahren ausgewählt. Als besonders geeignet hat sich als neuronales Netz ein Multi-Layer-Perceptron erwiesen, welches mit einer Reihe von Trainingsdatensätzen unter Verwendung der Trainingsverfahren Cascade Correlation (CC) oder Resilient Backpropagaticn (RProp) trainiert wurde.

Der Vorteil des Verfahrens ist es, daß keine mathematischen Algorithmen entwickelt werden müssen, um Aussagen über die Art einer auftretenden Störung und den Grad der Signaldegradation zu machen. Sämtliche Signale sind ohne Kenntnis des Übertragungsformats und/oder des Taktes analysierbar; daher wird die Transparenz von optischen Übertragungssystemen wie WDM-Netzen optimal unterstützt und nicht eingeschränkt. Da es sich bei den neuronalen Netzen um massiv parallele Strukturen handelt, steht ein Ergebnis sehr viel schneller zur Verfügung als ein durch einen mathematischen Algorithmus erzeugtes Ergebnis. Ein weiterer Vorteil des Verfahrens ist, daß sich auch bei der Beurteilung von unbekannten, nicht vorhergesehenen Eingabemustern, sinnvolle Ausgabewerte ergeben.

### Kurzbeschreibung der Zeichnung:

- Figur: 1 Ein Blockschaltbild eines erfindungsgemäßen Verfahrens;
- Figur 2: ein Amplitudenhistogramm eines optischen Übertragungssignals;
- Figur 3: die Topologie eines neuronalen Netzes in Form eines Multi-Layer-Perceptrons.

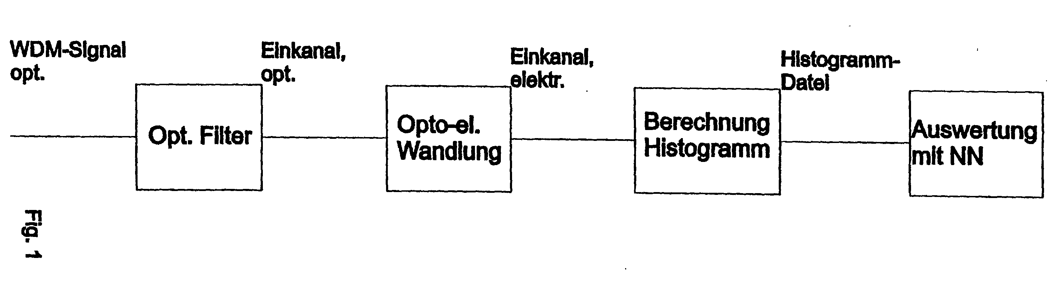

Figur 1 zeigt ein Blockschaltbild eines erfindungsgemäßen Verfahrens. Aus einem optischen WDM-Signal, welches sich aus einer Vielzahl von Wellenlängenkomponenten zusammensetzen kann, wird mit Hilfe eines optischen Filters ein optischer Kanal ausgewählt. Damit fällt nur Licht in einem bestimmten, vom Filter transmittierten Wellenlängenbereich auf eine opto-elektronische Wandlereinrichtung. Die Wandlereinrichtung ist ein Photodetektor, vorzugsweise eine Photodiode mit hoher Bandbreite, so daß auch schnelle Änderungen des optischen Signals erfaßbar sind. Beispielsweise wird eine Photodiode mit 20 Ghz Empfangsbandbreite benutzt. Die Wandlereinrichtung gibt ein elektrisches Ausgangssignal ab, dessen zeitlicher Verlauf im wesentlichen dem des optischen Übertragungssignals der detektierten Wellenlänge entspricht. Dieses elektronische Ausgangssignal wird asynchron abgetastet, wobei die Signalhöhe zu willkürlichen Zeitpunkten, jeweils integriert über einen Zeitschlitz vorbestimmter Länge, gemessen wird. Um ein Ausmitteln von Signalschwankungen innerhalb des Zeitschlitzes zu verhindern und somit auch schnelle Signalschwankungen erfassen zu können, werden bei Datenraten im Bereich von Gbit/s Zeitschlitze in der Größenordnung von Picosekunden verwendet. Um die vollständige Statistik des Übertragungssignals zu erhalten, werden eine Vielzahl solcher Abtastwerte gesammelt, vorzugsweise einige Tausend bis einige Hunderttausend pro Histogramm. Aus den Abtastwerten wird ein Histogramm erstellt, welches die relative Häufigkeit einer bestimmten Signalamplitude bzw. eines bestimmten Abtastwertes angibt. Die Daten werden in eine Histogramm-Datei geschrieben, welche mit einem geeignet trainierten neuronalen Netz ausgewertet wird.

Figur 2 zeigt drei Beispiele für Histogramme, die der Bitfehlerratenklasse BER = 10⁻¹¹ zugeordnet sind. In Figur 2 dargestellt ist für drei Übertragungssignal die relative Häufigkeit einer bestimmten Signalamplitude. Die Amplitude ist in willkürlichen Einheiten angegeben.

Zur Anwendung des Verfahrens ist es notwendig, dass vorher die verwendeten neuronalen Netze trainiert werden. Hierzu wurden Trainingsdatensätze, wie im Folgenden beschrieben, erzeugt:

Die drei Histogramme entsprechen extern modulierten digitalen Signalen mit einer Datenrate von 5 GBit/s und einem Non Return to Zero (NRZ) Datenformat. Die digitalen Daten wurden mit einem Zufallsgenerator der Periodizität 2¹⁵-1 erzeugt. Das Signal wurde zum einen durch Addieren einer verzögerten und gedämpften Signalkomponente zur Simulation von im Inband-Nebensprechen (crosstalk) gestört. Ein verrauschtes Signal (noise) wurde erzeugt, indem ein dämpfendes Element und ein Erbium-Verstärker bei der Signalübertragung verwendet wurde. Ein durch Dispersion gestörtes Signal wurde erzeugt, indem Standard-Lichtleitfasern variabler Länge kaskadiert wurden. Obwohl diesen drei Störungstypen im dargestellten Beispiel jeweils die gleiche Bitfehlerratenklasse zugeordnet ist, erkennt man anhand der Figur 2 stark unterschiedliche Amplitudenhistogramme, anhand derer erfindungsgemäß durch Musterzuordnung auf die Störungsursache rückgeschlossen werden kann. Die Unterschiede im Verlauf des Amplitudenhistogramms bei verschiedenen Störungsursachen werden erfindungsgemäß mit einem neuronalen Netz erfaßt und einer bestimmten Bitfehlerratenklasse und einer oder mehrerer Störungsursachen zugeordnet. Dabei ist es auch möglich, gemischte Störungsursachen zu erkennen.

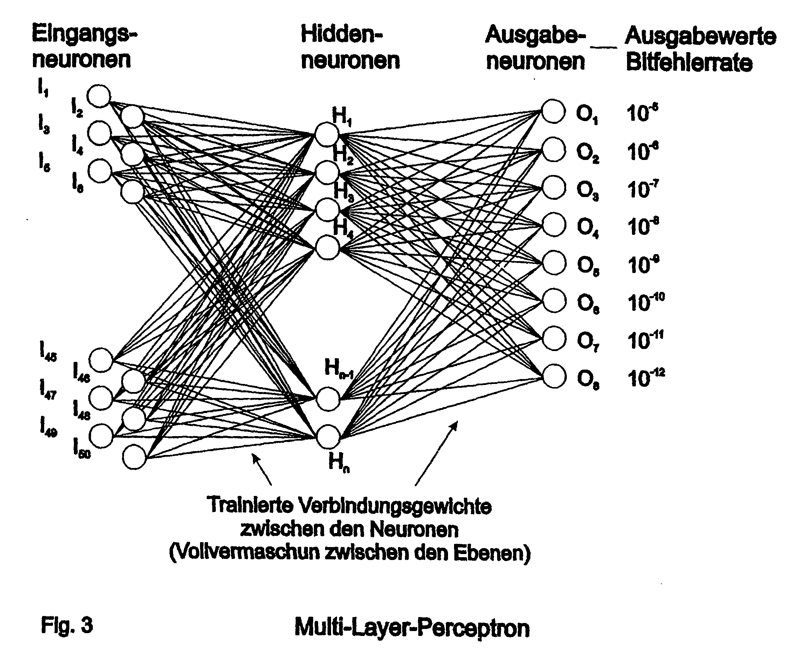

Um die Auswertung der Histogramme zu automatisieren und sie Bitfehlerraten-Klassen zuzuordnen, werden neuronale Netzwerke verwendet. Ein Beispiel für ein solches neuronales Netzwerk, welches sich zur Durchführung des Verfahrens als besonders geeignet erweist, ist in Figur 3 dargestellt. Figur 3 zeigt die Topologie eine "Multi-Layer-Perceptron"neuronalen Netzwerks. Dieses weist ein Eingaberegister von 50 Eingabe-Neuronen auf, die zur Eingabe von 50 Werten aus dem Histogramm dienen (Eingabe-Vektor). Diese Eingabewerte werden durch das neuronale Netz auf einer Reihe von Ausgabewerten, den Ausgabe-Vektor abgebildet. Die Eingabe-Ausgabe-Reiation ist nicht bekannt, sondern muß dem neuronalen Netz antrainiert werden. Sie kann modifiziert werden, indem die einzelnen Gewichte der Verbindungen zwischen den Neuronen der einzelnen Schichten in einem Trainingsverfahren eingestellt werden. In diesem Fall wurde das neuronale Netz mit dem "Back-Propagation"-Algorithmus trainiert. Er ist beispielsweise in A. Hiramatsu: Training Techniques for Neural Network Applications in ATM, IEEE Communication Magazine, Oct 1995, p. 58-67 beschrieben.

Um gemessene Histogramme zu Bitfehlerratenklassen zuzuordnen, wurden versuchsweise 370 Histogramme aufgezeichnet, die Übertragungssignale mit Bitfehlerraten von 10⁻¹² bis 10⁻⁵ repräsentieren. Die Signaldegradation wurde durch Rauschen, Crosstalk oder Dispersion verursacht. In einer Datenvorverarbeitung wurden 50 Werte aus jedem Histogramm zu einem Eingangsdatensatz für das neuronale Netz zusammengefaßt und als Eingabe für das neuronale Netz verwendet. Ein Teil der Eingangsdatensätze dient als Trainings-Eingabemuster, der Rest als Test-Eingabemuster, um das erfindungsgemäße Verfahren zu validieren. Das neuronale Netz wird mit den Trainingsmustern trainiert, wobei einer der Trainingsalgorithmen "Resilient Backpropagation" (Rprop) oder "Cascade-Correlation" (CC) verwendet wurde. Nach der Trainingsphase wurden die Testmuster verwendet, um festzustellen, ob das neuronale Netz den Test-Histogrammen die korrekte, zuvor experimentell bestimmte Bitfehlerrate zuordnet.

Jedes Ausgabeneuron des neuronalen Netzes in Figur 3 repräsentiert eine Bitfehlerratenklasse von 10⁻⁵ bis 10⁻¹². Die Amplitude des Signals am jeweiligen Ausgabeneuron gibt an, an welchem oder welchen der BER-Klassen das Eingabemuster zuzuordnen ist. In obigem Beispiel konnten die aufgezeichneten Amplitudenhistogramme mit sehr hoher Sicherheit der zuvor bestimmten BER-Klasse zugeordnet werden.

Das neuronale Netz wird in einer Weiterbildung des Verfahrens vorzugsweise so trainiert, daß neben der BER-Klasse auch die Störungsart dem Ausgabevektor, d.h. den Einträgen der Ausgabeneuronen, entnommen werden kann. Dazu sind so viele Ausgabeneuronen vorzusehen, daß der Ausgabevektor die relevanten BER-Klassen sowie die relevanten Störungsarten repräsentiert. Im obigen Beispiel mit 8 BER-Klassen und 3 Störungsarten müßten daher 10 Ausgabeneuronen vorgesehen und das neuronale Netz entsprechend trainiert werden.

### Gewerbliche Anwendbarkeit:

Die Erfindung läßt sich zur Überwachung der Übertragungsqualität eines analogen optischen Übertragungssystems, insbesondere eines WDM-Netzes, vorteilhaft gewerblich einsetzen. Neben der Klassifikation der Übertragungsqualität nach bestimmten Bitfehlerratenklassen ermöglicht das erfindungsgemäße Verfahren auch ein Aufspüren der Verschlechterungsursachen. Dadurch wird ein gezieltes Gegensteuern seitens des Netzbetreibers zum Verhindern weiterer Systemdegradation möglich.

## Patentansprüche

1. Verfahren zur Überwachung der Übertragungsqualität eines optischen Übertragungssystems, bei welchem ein Amplitudenhistogramm eines über das Übertragungssystem übertragenen optischen Signals, Übertragungssignal, aufgezeichnet und nach Bitfehlerraten und/oder Störungsursachen klassifiziert wird, **dadurch gekennzeichnet, daß**
- aus dem Amplitudenhistogramm Eingabedaten gewonnen werden, die einem neuronalen Netz zugeführt werden, welches aus den Eingabedaten Ausgabewerte erzeugt, und die Ausgabewerte Schätzwerten der Bitfehlerrate des Signals zugeordnet werden, und/oder
- die Ausgabewerte Störungsursachen des Signals zugeordnet sind, wie z. B. Rauschen, das im Englischen Cross-talk genannte Nebensprechen, Signalverzerrungen.

2. Verfahren nach Anspruch 1, **dadurch gekennzeichnet,**
**daß** das Übertragungssystem ein optisches Wellenlängenmultiplexnetz ist.

3. Verfahren nach einem der Ansprüche 1 bis 2, **dadurch gekennzeichnet,**
**daß** das Amplitudenhistogramm vor der Präsentation an das neuronale Netz vorverarbeitet wird, indem es normiert und daraus eine vorbestimmte Anzahl von Daten ausgewählt wird, die den Eingangsneuronen des neuronalen Netzes zugeführt werden, wobei die Anzahl der ausgewählten Daten der Anzahl der Eingangsneuronen entspricht.

4. Verfahren nach einem der Ansprüche 1 bis 3, **dadurch gekennzeichnet,**
**daß** das Übertragungssignal nach opto-elektonischer Umwandlung asynchron abgetastet wird und die Abtastwerte in das Amplitudenhistogramm eingehen.

5. Verfahren nach Anspruch 4, **dadurch gekennzeichnet,**
**daß** die Länge des für das Abtasten des optischen Signals verwendeten Zeitschlitzes derart an die Datenübertragungsrate angepaßt ist, daß auch schnelle Oszillationen der Amplitude des Übertragungssignals erfaßbar sind und nicht ausgemittelt werden.

6. Verfahren nach Anspruch 5, **dadurch gekennzeichnet,**
**daß** die Länge des Zeitschlitzes in der Größenordnung Picosekunden liegt.

7. Verfahren nach einem der Ansprüche 1 bis 6, **dadurch gekennzeichnet,**
**daß** das Übertragungssignal im Falle eines Wellenlängenmultiplexnetzes das über einen optischen Kanal mit einer vorbestimmten Grundwellenlänge übertragene Signal ist.

8. Verfahren nach einem der Ansprüche 1 bis 7, **dadurch gekennzeichnet,**
**daß** das Neuronale Netz ein Multi-Layer-Perceptron ist, welches mit einer Reihe von Trainingsdatensätzen, deren Ausgabewert bekannt ist, unter Verwendung der Trainingsverfahren Cascade Correlation, CC, oder Resilient Backpropagation, RProp, trainiert wurde.

## Claims

1. Method for monitoring the transmission quality of an optical transmission system in which an amplitude histogram of an optical signal transmitted via the transmission system, transmitted signal, is recorded and classified according to bit error rates and/or fault cause, **characterized in that**
- the amplitude histogram is used to obtain input data which are supplied to a neural network which generates output values from the input data and the output values are assigned to estimated values of the bit error rate of the signal, and/or
- the output values are assigned to fault causes of the signal, such as noise, cross-talk, signal distortions.

2. Method according to claim 1, **characterized in that**
the transmission system is an optical wavelength multiplex network.

3. Method according to any one of claims 1 to 2, **characterized in that**
the amplitude histogram is preprocessed prior to presentation to the neural network **in that** it is normalized and a predetermined number of data is selected therefrom, said data being supplied to the input neurons of the neural network, the number of data selected corresponding to the number of input neurons.

4. Method according to any one of claims 1 to 3, **characterized in that**
the transmitted signal is asynchronously sampled after optoelectronic conversion and the sampling values are incorporated into the amplitude histogram.

5. Method according to claim 4, **characterized in that**
the length of the time slot used for sampling of the optical signal is adapted to the data transfer rate in such a manner that even fast oscillations of the amplitude of the transmitted signal can be detected and are not averaged out.

6. Method according to claim 5, **characterized in that**
the length of the time slot is of the order of magnitude of picoseconds.

7. Method according to any one of claims 1 to 6, **characterized in that**
the transmitted signal in the case of a wavelength multiplex network is the signal which is transmitted via an optical channel with a predetermined fundamental wavelength.

8. Method according to any one of claims 1 to 7, **characterized in that**
the neural network is a multi-layer perceptron which has been trained with a series of training data records of known output value using the training methods Cascade Correlation, CC, or Resilient Backpropagation, RProp.

## Revendications

1. Procédé de surveillance de la qualité de transmission d'un système de transmission optique permettant d'enregistrer un histogramme des amplitudes d'un signal optique transmis au travers dudit système de transmission et de le classer selon les taux d'erreur sur bits et/ou selon les causes de perturbation, **caractérisé en ce que**
- l'histogramme des amplitudes permet d'obtenir des données d'entrée saisies dans un réseau neuronal produisant à partir desdites données d'entrée des valeurs de sortie et affectant les valeurs de sortie à des valeurs estimatives du taux d'erreur sur bits du signal et/ou
- lesdites valeurs de sortie sont affectées à des causes de perturbation du signal, tels que bruit de fond, diaphonie, appelée cross-talk en anglais, distorsions de signaux.

2. Procédé selon la revendication 1, **caractérisé en ce que**
le système de transmission est un réseau multiplex à répartition en longueurs d'ondes optiques.

3. Procédé selon l'une quelconque des revendications 1 à 2, **caractérisé en ce que**
l'histogramme d'amplitudes fait l'objet, avant d'être présenté au réseau neuronal, d'un traitement consistant à le normaliser et à sélectionner, à partir dudit histogramme normalisé, un nombre prédéterminé de données à transférer aux neurones d'entrée du réseau neuronal, le nombre de données sélectionnées correspondant au nombre de neurones d'entrée.

4. Procédé selon l'une quelconque des revendications 1 à 3, **caractérisé en ce que**
le signal de transmission est balayé de manière asynchrone après sa conversion optoélectronique et que les valeurs obtenues par ledit balayage sont saisies dans l'histogramme des amplitudes.

5. Procédé selon la revendication 4, **caractérisé en ce que**
la durée du créneau temporel utilisé pour le balayage du signal optique est adaptée à la vitesse de transfert des données de manière telle à pouvoir également saisir les oscillations rapides de l'amplitude du signal de transmission et à ne pas les aplanir.

6. Procédé selon la revendication 5, **caractérisé en ce que**
la durée du créneau temporel se situe dans l'ordre de grandeur des pico-secondes.

7. Procédé selon l'une quelconque des revendications 1 à 6, **caractérisé en ce que**
pour un réseau multiplex à répartition de longueurs d'ondes optiques, le signal de transmission est réputé être le signal transmis au travers d'un canal optique à une longueur d'onde fondamentale prédéterminée.

8. Procédé selon l'une quelconque des revendications 1 à 7, **caractérisé en ce que**
le réseau neuronal est un réseau perceptron à couches multiples programmé avec une série de données de calibrage à valeur de sortie connue au moyen du procédé de programmation Cascade Correlation, CC, ou Resilient Backpropagation, Rprop.
